# EUROPÄISCHE PATENTANMELDUNG

(11) **EP 4 166 522 A1**
(43) Veröffentlichungstag der Anmeldung: **19.04.2023**
(21) Anmeldenummer: 21202631.4
(22) Anmeldetag: 14.10.2021
(51) Int. Cl.: C03C 23/00, A61C 13/00, B24B 1/00

(54) **FORMGEBUNGSGERÄT FÜR EIN DENTALOBJEKT**

(71) Anmelder: Ivoclar Vivadent AG, 9494 Schaan (LI)
(72) Erfinder: RAMPF, Markus, 7212 Seewis Dorf (CH); DITTMER, Marc, 6800 Feldkirch (AT); NIEDRIG, Christian, 9464 Rüthi (CH); RITZBERGER, Christian, 9472 Grabs (CH)
(74) Vertreter: Baldus, Oliver

(57) **Zusammenfassung**

Die vorliegende Erfindung betrifft ein Formgebungsgerät (100) für ein Dentalobjekt (101), mit einer Formgebungseinrichtung (127) zum Herstellen einer vorgegebenen räumlichen Form des Dentalobjektes (101); und einer Strahlungsquelle (105) zum Emittieren von Strahlung mit einer Wellenlänge, die kleiner als 350 nm ist, auf das Material (129) des Dentalobjekts (101) .

## Beschreibung

Die vorliegende Erfindung betrifft ein Formgebungsgerät für ein Dentalobjekt und ein Formgebungsverfahren für ein Dentalobjekt.

Polychrome Gläser und Glaskeramiken können durch eine Belichtung zusammen mit einer thermischen Behandlung eingefärbt werden, wie beispielsweise ein Quarzglas, eine Quarz-Glaskeramik, ein Lithiumalumosilikatglas, eine Lithiumaluminosilikat-Glaskeramik, ein Lithiumsilikatglas oder eine Lithiumsilikat-Glaskeramik. Die Belichtung erfolgt hierbei üblicherweise mittels UV-Strahlung. Die unterschiedliche Farbwirkung wird nach erfolgter Belichtung hauptsächlich über eine Temperaturbehandlung hergestellt.

Die polychromen Gläser und Glaskeramiken umfassen hierzu beispielsweise eine oxidierbare Komponente und eine reduzierbare Färbekomponente. Die oxidierbare Komponente ist eine Komponente, die durch Bestrahlung oxidiert werden bzw. zur Elektronenabgabe angeregt werden kann. Oxidierbare Komponenten sind beispielsweise Cer-Ionen, Europium-Ionen und Kupfer-Ionen und deren Mischungen. Die reduzierbare Färbekomponente ist beispielsweise eine Komponente, die unter Ausbildung einer Farbänderung reduziert werden kann. Bevorzugte reduzierbare Färbekomponenten sind Kationen von Metallen, wie beispielsweise von Silber, Gold, Kupfer oder deren Kombinationen.

Es ist die technische Aufgabe der vorliegenden Erfindung, eine anwendungssichere und einfache Farbgebung eines Dentalobjekts zu ermöglichen, während das Dentalobjekt geformt wird.

Diese technische Aufgabe wird durch Gegenstände nach den unabhängigen Ansprüchen gelöst. Technisch vorteilhafte Ausführungsformen sind Gegenstand der abhängigen Ansprüche, der Beschreibung und der Zeichnungen.

Gemäß einem ersten Aspekt wird die technische Aufgabe durch ein Formgebungsgerät für ein Dentalobjekt gelöst, mit einer Formgebungseinrichtung zum Herstellen einer vorgegebenen räumlichen Form des Dentalobjektes; und einer Strahlungsquelle zum Emittieren von Strahlung mit einer Wellenlänge, die kleiner als 350 nm ist, auf das Material des Dentalobjekts. Da die Eindringtiefe der UV-Strahlung begrenzt ist, ist es vorteilhaft, die Belichtung bereits während und/oder nach der Formgebung aus individuellen Richtungen durchzuführen.

In einer technisch vorteilhaften Ausführungsform des Formgebungsgeräts umfasst das Formgebungsgerät eine Steuereinrichtung zum Steuern der Formgebungseinrichtung und/oder der Strahlungsquelle. Dadurch wird beispielsweise der technische Vorteil erreicht, dass sowohl die Formgebung als auch eine entsprechende Belichtung abgestimmt durch die Steuereinrichtung durchgeführt werden können.

In einer weiteren technisch vorteilhaften Ausführungsform des Formgebungsgeräts ist die Steuereinrichtung ausgebildet, eine Intensität der Strahlungsquelle zu steuern. Dadurch wird beispielsweise der technische Vorteil erreicht, dass die Farbgebung durch die Intensität der Strahlung entsprechend unterschiedlich initiiert werden kann.

In einer weiteren technisch vorteilhaften Ausführungsform des Formgebungsgeräts ist die Steuereinrichtung ausgebildet, die Strahlungsquelle und die Formgebungseinrichtung gleichzeitig oder zeitversetzt zu aktivieren. Dadurch wird beispielsweise der technische Vorteil erreicht, dass die Farbgebung und die Formgebung in geringem zeitlichem Abstand zueinander erfolgen.

In einer weiteren technisch vorteilhaften Ausführungsform des Formgebungsgeräts ist die Strahlungsquelle eine gerichtete und/oder fokussierte Strahlungsquelle. Die Strahlungsquelle kann ausgebildet sein, die Strahlung auf dem Dentalobjekt oder Material zu fokussieren. Dadurch wird beispielsweise der technische Vorteil erreicht, dass einzelne Oberflächenbereiche des Materials aktiviert werden können.

In einer weiteren technisch vorteilhaften Ausführungsform des Formgebungsgeräts umfasst das Formgebungsgerät eine Bewegungseinrichtung zum Bewegen der Strahlungsquelle. Dadurch wird beispielsweise der technische Vorteil erreicht, dass die Strahlungsquelle auf unterschiedliche Bereiche des Materials gerichtet werden kann.

In einer weiteren technisch vorteilhaften Ausführungsform des Formgebungsgeräts ist die Bewegungseinrichtung ausgebildet, die Strahlungsquelle in zwei oder drei Raumrichtungen zu bewegen und/oder eine Richtung der Strahlungsquelle einzustellen. Dadurch wird beispielsweise der technische Vorteil erreicht, dass das Material gezielt in unterschiedlichen Richtungen belichtet werden kann.

In einer weiteren technisch vorteilhaften Ausführungsform des Formgebungsgeräts ist die Bewegungseinrichtung ausgebildet, nacheinander unterschiedliche Positionen anzufahren. Dadurch wird beispielsweise der technische Vorteil erreicht, dass unterschiedliche Bereiche des Materials nacheinander in unterschiedlicher Stärke aktiviert werden können.

In einer weiteren technisch vorteilhaften Ausführungsform des Formgebungsgeräts umfasst das Formgebungsgerät eine Heizeinrichtung zum Erhitzen des Dentalobjekts. Dadurch wird beispielsweise der technische Vorteil erreicht, dass der Farbgebungsprozess innerhalb des Formgebungsgeräts abgeschlossen werden kann.

In einer weiteren technisch vorteilhaften Ausführungsform des Formgebungsgeräts ist das Formgebungsgerät eine dentale Schleif- oder Fräsmaschine. Dadurch wird beispielsweise der technische Vorteil erreicht, dass besonders geeignete Formgebungsgeräte für die Farbgebung verwendet werden.

Gemäß einem zweiten Aspekt wird die technische Aufgabe durch ein Formgebungsverfahren für ein Dentalobjekt gelöst, mit den Schritten eines Herstellens einer vorgegebenen räumlichen Form des Dentalobjektes durch eine Formgebungseinrichtung; und eines Emittierens von Strahlung mit einer Wellenlänge, die kleiner als 350 nm ist, auf das Material des Dentalobjekts durch eine Strahlungsquelle. Durch das Formgebungsverfahren werden die gleichen technischen Vorteile wie durch das Formgebungsgerät nach dem ersten Aspekt erreicht.

In einer technisch vorteilhaften Ausführungsform des Formgebungsverfahrens wird eine Intensität der Strahlungsquelle gesteuert. Dadurch wird beispielsweise ebenfalls der technische Vorteil erreicht, dass die Farbgebung durch die Intensität der Strahlung entsprechend unterschiedlich initiiert werden kann.

In einer weiteren technisch vorteilhaften Ausführungsform des Formgebungsverfahrens werden die Strahlungsquelle und die Formgebungseinrichtung gleichzeitig oder zeitversetzt aktiviert. Dadurch wird beispielsweise der technische Vorteil erreicht, dass die Farbgebung und die Formgebung in geringem zeitlichem Abstand zueinander erfolgen.

In einer weiteren technisch vorteilhaften Ausführungsform des Formgebungsverfahrens wird die Strahlungsquelle bewegt. Dadurch wird beispielsweise ebenfalls der technische Vorteil erreicht, dass die Strahlungsquelle auf unterschiedliche Bereiche des Materials gerichtet werden kann.

In einer weiteren technisch vorteilhaften Ausführungsform des Formgebungsverfahrens wird die Strahlungsquelle in zwei oder drei Raumrichtungen bewegt und/oder eine Richtung der Strahlungsquelle eingestellt. Dadurch wird beispielsweise der technische Vorteil erreicht, dass das Material gezielt in unterschiedlichen Richtungen belichtet werden kann.

Ausführungsbeispiele der Erfindung sind in den Zeichnungen dargestellt und werden im Folgenden näher beschrieben.

Es zeigen:
- Fig. 1: eine schematische Darstellung eines Formgebungsgeräts zum Herstellen eines Dentalobjektes; und
- Fig. 2: ein Blockdiagramm eines Formgebungsverfahren für ein Dentalobjekt.

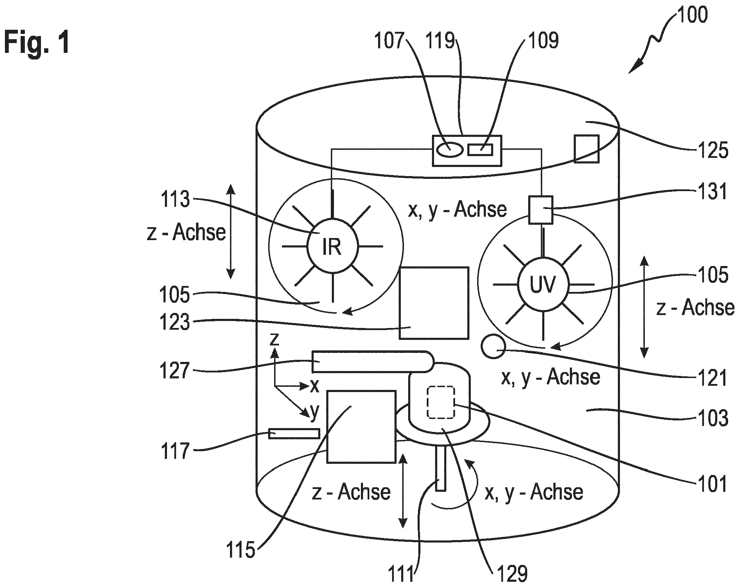

Fig. 1 zeigt eine schematische Darstellung eines Formgebungsgeräts 100 zum Herstellen eines Dentalobjektes 101. Das Dentalobjekt 101 ist eine dentale Restauration, wie beispielsweise eine Krone, eine Brücke, ein Veneer, ein Abutment, ein Inlay oder ein Onlay. Das Dentalobjekt 101 wird aus einem polychromen Glas und oder einer polychromen Glaskeramik als Material 129 hergestellt. Das Material 129 des Dentalobjekts 101 wird durch eine kurzwellige Belichtung zusammen mit einer thermischen Behandlung eingefärbt. Die unterschiedliche Farbwirkung des Materials 129 wird nach erfolgter Belichtung hauptsächlich über eine Temperaturbehandlung hergestellt.

Das Formgebungsgerät 100 umfasst eine Formgebungseinrichtung 127 zum Herstellen der vorgegebenen räumlichen Form des Dentalobjektes 101, wie beispielsweise einen Fräs- oder Schleifkopf. Der Fräskopf fräst einen Rohling des Materials 129, bis dieser die gewünschte Form und das gewünschte Aussehen erreicht hat. Beim Fräsen erfolgt die Bearbeitung mit definierter Schneide. Beim Schleifen erfolgt die Bearbeitung mit undefinierter Schneide. Die Formgebungseinrichtung 127 kann aber auch ein 3D-Drucker oder eine Poliereinrichtung sein.

Der Rohling wird in eine Kammer 103 des Formgebungsgeräts 100 eingelegt. Die Kammer 103 kann eine Tür 115 umfassen, die geöffnet wird, um den Rohling in das Innere einzulegen. Zum Bearbeiten und Belichten des Materials 129 wird die Tür 115 geschlossen, so dass kein abgetragenes Material 129 oder Licht aus der Kammer 103 nach außen treten kann.

Zusätzlich umfasst das Formgebungsgerät 100 eine Strahlungsquelle 105 zum Emittieren von Strahlung mit einer Wellenlänge, die kleiner als 350 nm ist, auf das Material 129 in Bearbeitung. Die Strahlungsquelle 105 wird elektrisch betrieben und ist beispielsweise durch eine Quecksilberdampflampe, eine Quarzlampe, eine Schwarzlichtlampe, einen UV-Laser oder eine UV-Leuchtdiode gebildet. Die Strahlungsquelle 105 kann aber auch eine Röntgenröhre zur Erzeugung von Röntgenstrahlen umfassen.

Die Strahlungsquelle 105 ist geeignet, Strahlung mit einer Wellenlänge zwischen 350 nm und 5 pm, vorzugsweise zwischen 350 nm und 10 nm, oder höchst vorzugsweise zwischen 350 nm und 100 nm zu emittieren. Neben der Verwendung von UV-Strahlung ist es aber auch möglich, das Materials 129 mit energiereicher Strahlung zu belichten. Beispielsweise mit Röntgenstrahlung mit einer Wellenlänge von 5 pm bis 10 nm. Besonders bevorzugt ist jedoch Strahlung im Bereich von 100 nm bis 350 nm.

Die emittierte Strahlung dient zum Belichten des Materials 129. Die emittierte Strahlung von der Strahlungsquelle 105 trifft auf das Material 129 des Dentalobjekts 101 in Bearbeitung. Durch die Strahlung werden in dem Material 129 elektronische Übergänge angeregt, die bei einer anschließenden Erwärmung des Materials 129 zu einer Farbänderung führen.

Die Belichtung des Materials 129 kann während und/oder direkt nach der Formgebung durch ein abtragendes oder polierendes Verfahren innerhalb des Formgebungsgeräts 100 erfolgen. Da die Eindringtiefe der UV-Strahlung begrenzt ist, ist es technisch vorteilhaft, die Belichtung bereits während und/oder nach der Formgebung aus unterschiedlichen Richtungen durchzuführen. Die Bearbeitung und Belichtung des Materials erfolgt innerhalb des Formgebungsgeräts 100. Die Positionierung des Materials 129 und/oder Strahlungsquelle 105 erfolgt ebenfalls durch das Formgebungsgerät 100.

Zudem kann das Formgebungsgerät 100 eine Heizeinrichtung 113 zur örtlichen thermischen Behandlung des geformten Dentalobjektes 101 und zur örtlichen Farbeinstellung des Dentalobjektes 101 umfassen. Die Heizeinrichtung 113 kann beispielsweise durch eine Infrarot-Strahlungsquelle, eine Laser-Strahlungsquelle, eine Mikrowellen-Strahlungsquelle oder eine Induktions-Strahlungsquelle gebildet sein. Die Laser-Strahlungsquelle kann durch einen thermischen Laser oder Infrarot-Laser gebildet sein, wie beispielsweise ein Nd:YAG-Laser, ein Er:YAG-Laser, ein CO- oder CO2-Laser. Die Heizeinrichtung 113 kann beispielsweise auch durch eine elektrisch betriebene Infrarotlampe, eine Rotlichtlampe oder eine Wärmelampe gebildet sein. Bevorzugt wird eine IR-Strahlung im Bereich mit einer Wellenlänge größer als 700 nm, besonders bevorzugt 700 - 3000 nm.

Falls ausreichend Energie von der Glaskeramik absorbiert wird, kann auch jede andere Wellenlänge verwendet werden, wie beispielsweise im sichtbaren oder UV-Bereich, da es für die Erwärmung lediglich auf den thermischen Eintrag in das Material 129 ankommt. Alternativ kann die Wärmebehandlung auch mittels Mikrowellenstrahlung erfolgen. Die Heizeinrichtung 113 ist in der Lage, das geformte Dentalobjekt 101 auf eine Temperatur bis zu 1200°C zu erhitzen, insbesondere in einem Temperaturbereich zwischen 25°C und 1200°C, zwischen 25°C und 1100°C oder zwischen 25°C und 1000°C zu erhitzen.

Die Heizeinrichtung 113 kann innerhalb oder außerhalb der Kammer 103 angeordnet sein. Eine Strahlungsführung in die Kammer 103 kann mittels einer Lichtleitfaser erfolgen. Die Heizeinrichtung 113, wie beispielsweise ein IR-Laser, kann auch außerhalb der Kammer angeordnet sein. Die emittierte Strahlung kann dann mittels eines Scanners (z.B. DMD - Digital Mirror Device) durch ein geeignetes Sichtfenster, über das im Inneren der Kammer 103 angeordnete Material 129 gerastert werden. Dadurch wird beispielsweise der technische Vorteil erreicht, dass das Material 129 erwärmt und eine Farbgebung des Dentalobjekts 101 abgeschlossen werden kann.

Bereiche des Materials 129, die der Strahlung ausgesetzt werden, nehmen nach dem Erhitzen eine Farbe an, die von der vorherigen Belichtung oder thermischen Behandlung abhängt. Durch dieses Verfahren wird der technische Vorteil erreicht, dass das herzustellende Dentalobjekt 101 sicher zur Farbgebung in ein und demselben Gerät belichtet und erwärmt werden kann.

Die Strahlungsquelle 105 kann einen elektrischen Schalter umfassen, der beim Öffnen der Tür 115 betätigt wird und durch den die Strahlungsquelle 105 deaktiviert wird. Dadurch wird der technische Vorteil erreicht, dass das Austreten gefährlicher Strahlung aus der Kammer 103 verhindert wird. Die Strahlungsquelle 105 ist beispielsweise in einer Wand der Kammer 103 angeordnet, so dass diese in den Innenraum strahlen kann. Vor der Strahlungsquelle 105 kann eine Blende 121 angeordnet sein, die die seitlichen Bereiche der Strahlung abschirmt, wie beispielsweise eine Lochblende. Dadurch kann die emittierte Strahlung auf bestimmte Bereiche des Dentalobjektes 101 gerichtet werden.

Das Formgebungsgerät 100 kann aber auch einen Lichtleiter umfassen, mit dem die Strahlung von der Strahlungsquelle 105 an das herzustellende Dentalobjekt 101 herangeführt wird, wie beispielsweise eine Quarzglasfaser. Die Strahlungsquelle 105 kann hinter einem Spezialglas angeordnet sein, wie beispielsweise hinter einer Filterscheibe, die nur vorgegebene Wellenlängenbereiche hindurchtreten lässt.

Um die Intensität der Strahlungsquelle 105 oder die Heizleistung der Heizeinrichtung 113 einzustellen, umfasst das Formgebungsgerät 100 eine Einstellungseinrichtung 107. Die Einstellungseinrichtung 107 kann durch entsprechende Regler gebildet sein, mit denen die Leistung der Strahlungsquelle 105 oder der Heizeinrichtung 113 geregelt werden kann. Mit dieser Einstellungseinrichtung 107 kann beispielsweise der Strom oder die Spannung eingestellt werden, mit der die Strahlungsquelle 105 oder die Heizeinrichtung 113 betrieben wird.

Die Einstellungseinrichtung 107 kann allerdings auch digital implementiert sein. In diesem Fall umfasst das Formgebungsgerät 100 eine Datenschnittstelle 117, über die von einem externen Gerät Daten für eine Steuerung der Intensität der Strahlungsquelle 105 oder der Leistung der Heizeinrichtung 113 übertragen werden können, wie beispielsweise eine WLAN-Schnittstelle oder eine Bluetooth-Schnittstelle.

Beispielsweise kann ein Mobiltelefon oder ein Tablet mit einer geeigneten Applikation ausgerüstet werden, mit der sich die Intensität der Strahlungsquelle 105 oder die Leistung der Heizeinrichtung 113 steuern lässt. Zu diesem Zweck hat das Formgebungsgerät 100 eine Steuereinrichtung 119, die mit der Applikation kommuniziert und die die ausgesandte Intensität der Strahlungsquelle 105 oder die Leistung der Heizeinrichtung 113 erhöhen oder verringern kann. Die Steuereinrichtung 119 kann einen Mikroprozessor und einen digitalen Speicher umfassen, in dem Daten und Programme für die Steuerung der Funktionen des Formgebungsgeräts 100 abgelegt sind.

Zudem kann die Steuereinrichtung 119 eine Zeitschalteinrichtung 109 umfassen, die die Strahlungsquelle 105 oder die Heizeinrichtung 113 für einen vorgegebenen Zeitraum aktiviert und nach Ablauf des vorgegebenen Zeitraums automatisch deaktiviert. Die Steuereinrichtung 119 kann die Strahlungsquelle 105 oder die Heizeinrichtung 113 gleichzeitig oder zeitversetzt aktivieren. Dadurch wird der technische Vorteil erreicht, dass das Material 129 automatisch für eine bestimmte Belichtungsdauer belichtet werden kann und eine definierte Belichtung mit anschließender Wärmebehandlung erfolgt. Die Steuereinrichtung 119 kann ausbildet sein, die Intensität der Strahlungsquelle 105 und die Temperatur der Heizeinrichtung 113 zeitlich zu steuern, beispielsweise anhand vorgegebener Intensitäts- und Temperaturverläufe.

Das Formgebungsgerät 100 kann eine einzige oder mehrere Strahlungsquellen 105 zum Emittieren von Strahlung mit einer Wellenlänge umfassen, die kleiner als 350 nm ist. Durch eine einzige Strahlungsquelle 105 wird der technische Aufwand verringert. Beim Einsatz einer einzigen Strahlungsquelle 105 ist es vorteilhaft das Material 129 in verschiedenen räumlichen Richtungen zu bewegen, so dass die Strahlung auf alle Bereiche des herzustellenden Dentalobjektes 101 treffen kann.

Zu diesem Zweck umfasst das Formgebungsgerät 100 eine Bewegungseinrichtung 111 zum Bewegen des Materials 129 vor der Strahlungsquelle 105 oder der Heizeinrichtung 113. Die Bewegungsrichtung 111 ist ausgebildet, das Material 129 in einer Höhe zu verfahren und/oder gegenüber der Strahlungsquelle 105 oder der Heizeinrichtung 113 zu drehen. Die Drehachse ist beispielsweise eine vertikale Achse (z-Achse). Entlang der Drehachse kann das Material 129 zusätzlich linear verfahren werden. Die Bewegungseinrichtung 111 kann aber auch durch einen mechanischen Arm gebildet werden, mit dem das Material 129 im Inneren der Kammer 103 bewegt werden kann. Mit diesem Arm kann das Material 129 steuerbar vor der Strahlungsquelle 105 bewegt werden.

Sowohl das herzustellende Dentalobjekt 101 als auch die Strahlungsquelle 105 oder die Heizeinrichtung 113 können in x, y- und z-Richtung positionierbar sein. Die Bewegungseinrichtung 111 ist beispielsweise durch einen Drehteller gebildet, auf dem das Material 129 angeordnet werden kann. Der Drehteller ist vor der Strahlungsquelle 105 oder der Heizeinrichtung 113 drehbar und in einer Höhe verstellbar. Zu diesem Zweck wird der Drehteller beispielsweise von Elektromotoren über eine passende Mechanik angetrieben.

Das Material 129 kann beispielsweise auf einem beweglichen Tisch angeordnet sein, der in den drei Raumrichtungen beweglich ist. Die Strahlungsquelle 105 kann eine Lichtleitfaser umfassen, die in den drei Raumrichtungen beweglich ist. Die Bewegung der Strahlungsquelle 105 oder der Heizeinrichtung 113 als auch des Materials 129 lässt sich über einen Roboterarm realisieren.

Die Bewegungseinrichtung 111 kann ebenfalls von der elektronischen Steuereinrichtung 119 gesteuert werden. In der elektronischen Steuereinrichtung 119 kann auch ein Bewegungsprogram gespeichert sein, dass die Bewegungseinrichtung 111 steuert und dadurch das Material 129 in einem vorgegebenen zeitlichen Ablauf in Bezug zur Strahlungsquelle 105, der Heizeinrichtung 113 oder der Formgebungseinrichtung 127 bewegt. Durch das Bewegungsprogramm kann das Material 129 gegenüber der Strahlungsquelle 105, der Heizeinrichtung 113 oder der Formgebungseinrichtung 127 positioniert werden. Dabei lassen sich nacheinander unterschiedliche Positionen anfahren.

Andersherum ist es aber auch möglich, die Strahlungsquelle 105 oder die Heizeinrichtung 113 über eine entsprechende Bewegungseinrichtung 131 in einer Höhe zu verfahren und/oder um das Material 129 herumzubewegen. Auch zu diesem Zweck können Elektromotoren über eine passende Mechanik angetrieben werden. Im Allgemeinen sind das Material 129 und/oder die Strahlungsquelle 105 oder die Heizeinrichtung 113 frei beweglich.

Beim Einsatz mehrerer Strahlungsquellen 105 können diese um das Material 129 herum angeordnet sein. Dadurch kann das Material 129 von mehreren Seiten beleuchtet werden. In diesem Fall kann auf eine Bewegungseinrichtung 111 verzichtet werden.

Auch die Heizeinrichtung 113 kann beweglich angeordnet sein, so dass diese in einer Höhe verändert werden kann und um das Material 129 herumbewegt werden kann. Vor der Heizeinrichtung 113 kann ebenfalls eine Blende 121 angeordnet sein, die die seitlichen Bereiche der Strahlung abschirmt, wie beispielsweise eine Lochblende.

Die Temperatur des Materials 129 in der Kammer 103 kann über ein Strahlungspyrometer oder ein geeignetes Thermoelement bestimmt werden. Das Thermoelement kann zu diesem Zweck zum Material 129 geführt werden. Die Signale über die Temperatur des Materials 129 werden der Steuereinrichtung 119 zugeführt. Auf diese Weise kann die Steuereinrichtung 119 die Temperatur präzise auf einen vorgegebenen Wert einregeln.

Das Formgebungsgerät 100 kann eine elektronische Kamera 125 zum Erfassen eines Farbwertes des Materials 129 umfassen. Die elektronische Kamera 125 ist in der Lage, ein Bild des Materials 129 aufzunehmen. Durch die elektronische Kamera 125 lässt sich beispielsweise ein RGB- oder ein L*a*b*-Farbwert des Materials 129 erfassen und an die Steuereinrichtung 119 übertragen. Durch die Steuereinrichtung 119 kann die Heizeinrichtung 113 deaktiviert werden, wenn der RGB-Farbwert einem vorgegebenen RGB-Farbwert entspricht.

Sobald die thermische Behandlung des geformten Dentalobjektes 101 abgeschlossen ist, kann das Dentalobjekt 101 auf Zimmertemperatur heruntergekühlt werden. Dies geschieht über eine Kühleinrichtung 123 zum Kühlen des erwärmten Dentalobjektes 101. Beispielsweise wird das Dentalobjekt 101 mittels eines Luftstroms gekühlt, der durch einen Ventilator als Kühleinrichtung 123 erzeugt wird. Die Kühleinrichtung 123 kann ebenfalls von der Steuereinrichtung 119 aktiviert und deaktiviert werden.

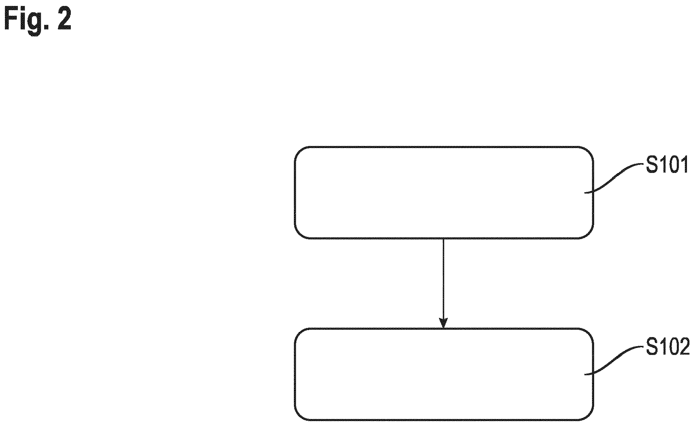

Fig. 2 zeigt ein Blockdiagramm eines Formgebungsverfahren für das Dentalobjekt 101. Das Formgebungsverfahren umfasst den Schritt S101 eines Herstellens einer vorgegebenen räumlichen Form des Dentalobjektes 101 durch die Formgebungseinrichtung 127. Weiter umfasst das Formgebungsverfahren den Schritt S102 eines Emittierens von Strahlung mit einer Wellenlänge, die kleiner als 350 nm ist, auf das Material 129 des Dentalobjekts 101 durch eine Strahlungsquelle 105.

Bereiche des Materials 129, die der Strahlung ausgesetzt werden, nehmen nach dem Erhitzen des Materials 129 eine Farbe an, die von der vorherigen Belichtung und dem Temperaturprofil abhängt. Durch dieses Verfahren wird der technische Vorteil erreicht, dass das Dentalobjekt 101 sicher zur Farbgebung in ein und demselben Gerät belichtet und bearbeitet werden kann.

Die Belichtung der polychromen Gläser und Glaskeramiken kann im Workflow der Formgebung in dem Formgebungsgerät 100 erfolgen. Einen positiven weiteren technischen Effekt kann die Strahlung der Strahlungsquelle 105 im Hinblick auf die Alterung der Schleifmediums oder des Kühlwassers haben, da diese anti-bakteriell wirkt und die Verwendungsdauer drastisch verlängert.

Alle in Verbindung mit einzelnen Ausführungsformen der Erfindung erläuterten und gezeigten Merkmale können in unterschiedlicher Kombination in dem erfindungsgemäßen Gegenstand vorgesehen sein, um gleichzeitig deren vorteilhafte Wirkungen zu realisieren.

Alle Verfahrensschritte können durch Einrichtungen implementiert werden, die zum Ausführen des jeweiligen Verfahrensschrittes geeignet sind. Alle Funktionen, die von gegenständlichen Merkmalen ausgeführt werden, können ein Verfahrensschritt eines Verfahrens sein.

Der Schutzbereich der vorliegenden Erfindung ist durch die Ansprüche gegeben und wird durch die in der Beschreibung erläuterten oder den Figuren gezeigten Merkmale nicht beschränkt.

### BEZUGSZEICHENLISTE

- 100: Formgebungsgerät
- 101: Dentalobjekt
- 103: Kammer
- 105: Strahlungsquelle
- 107: Einstellungseinrichtung
- 109: Zeitschalteinrichtung
- 111: Bewegungseinrichtung
- 113: Heizeinrichtung
- 115: Tür
- 117: Datenschnittstelle
- 119: Steuereinrichtung
- 121: Blende
- 123: Kühleinrichtung
- 125: elektronische Kamera
- 127: Formgebungseinrichtung
- 129: Rohling/Material
- 131: Bewegungseinrichtung

## Patentansprüche

1. Formgebungsgerät (100) für ein Dentalobjekt (101), mit:
- einer Formgebungseinrichtung (127) zum Herstellen einer vorgegebenen räumlichen Form des Dentalobjektes (101); und
- einer Strahlungsquelle (105) zum Emittieren von Strahlung mit einer Wellenlänge, die kleiner als 350 nm ist, auf das Material (129) des Dentalobjekts (101) .

2. Formgebungsgerät (100) nach Anspruch 1, wobei das Formgebungsgerät (100) eine Steuereinrichtung (119) zum Steuern der Formgebungseinrichtung (127) und/oder der Strahlungsquelle (105) umfasst.

3. Formgebungsgerät (100) nach Anspruch 2, wobei die Steuereinrichtung (119) ausgebildet ist, eine Intensität der Strahlungsquelle (105) zu steuern.

4. Formgebungsgerät (100) nach Anspruch 2 oder 3, wobei die Steuereinrichtung (119) ausgebildet ist, die Strahlungsquelle (105) und die Formgebungseinrichtung (127) gleichzeitig oder zeitversetzt zu aktivieren.

5. Formgebungsgerät (100) nach einem der vorangehenden Ansprüche, wobei die Strahlungsquelle (105) eine gerichtete und/oder fokussierte Strahlungsquelle ist.

6. Formgebungsgerät (100) nach einem der vorangehenden Ansprüche, wobei das Formgebungsgerät (100) eine Bewegungseinrichtung (131) zum Bewegen der Strahlungsquelle (105) umfasst.

7. Formgebungsgerät (100) Anspruch 6, wobei die Bewegungseinrichtung (131) ausgebildet ist, die Strahlungsquelle (105) in zwei oder drei Raumrichtungen zu bewegen und/oder eine Richtung der Strahlungsquelle (105) einzustellen.

8. Formgebungsgerät (100) nach einem der vorangehenden Ansprüche, wobei die Bewegungseinrichtung (131) ausgebildet ist, nacheinander unterschiedliche Positionen anzufahren.

9. Formgebungsgerät (100) nach einem der vorangehenden Ansprüche, wobei das Formgebungsgerät (100) eine Heizeinrichtung (113) zum Erhitzen des Dentalobjekts (101) umfasst.

10. Formgebungsgerät (100) nach einem der vorangehenden Ansprüche, wobei das Formgebungsgerät (100) eine dentale Schleif- oder Fräsmaschine ist.

11. Formgebungsverfahren für ein Dentalobjekt (101), mit den Schritten:
- Herstellen (S101) einer vorgegebenen räumlichen Form des Dentalobjektes (101) durch eine Formgebungseinrichtung (127); und
- Emittieren (S102) von Strahlung mit einer Wellenlänge, die kleiner als 350 nm ist, auf das Material (129) des Dentalobjekts (101) durch eine Strahlungsquelle (105) .

12. Formgebungsverfahren nach Anspruch 11, wobei eine Intensität der Strahlungsquelle (105) gesteuert wird.

13. Formgebungsverfahren nach Anspruch 11 oder 12, wobei die Strahlungsquelle (105) und die Formgebungseinrichtung (127) gleichzeitig oder zeitversetzt aktiviert werden.

14. Formgebungsverfahren nach einem der Ansprüche 11 bis 13, wobei die Strahlungsquelle (105) bewegt wird.

15. Formgebungsverfahren nach Anspruch 14, wobei die Strahlungsquelle (105) in zwei oder drei Raumrichtungen bewegt wird und/oder eine Richtung der Strahlungsquelle (105) eingestellt wird.
